Europäisches Patentamt

**European Patent Office**

**Office européen des brevets**

(19)

(11) Publication number: **0 045 127**
A2

# (12) EUROPEAN PATENT APPLICATION

(21) Application number: **81302529.3**

(22) Date of filing: **08.06.81**

(51) Int. Cl.³: **G 09 F 7/08**

(30) Priority: **24.07.80 ES 493719**

(43) Date of publication of application: **03.02.82**
**Bulletin 82/5**

(84) Designated Contracting States: **AT BE CH DE FR GB IT LI LU NL SE**

(71) Applicant: **Sistemas Plannigraf S.A., Bilbao 161-163, Barcelona 18 (ES)**

(72) Inventor: **Salles, More Mauricio, Modolell 51-55-2-7a, Barcelona 21 (ES)**

(74) Representative: **Corfield, Peter Ralph et al, MARKS & CLERK Alpha Tower, ATV Centre, Birmingham B1 1TT (GB)**

(54) **Improvements in the signalling and control members of planning boards.**

(57) Signalling and controlling members of planning boards of the wall type having modular elements, the members comprising coaxial elements 1, 3 having symbols, numbers, letters or colours, the inner element 1 of each member being freely rotatable while the other element 3 surrounds the inner element and is rotatable relatively thereto, the elements 1, 3 being independantly operable, and the outer element 3 having facets 4 in each of which is an opening 5 through which the inner element 1 can be seen, the said surface 7 of the inner element 1 being divided into bands of different colour or other signs.

ACTORUM AG

COMPLETE DOCUMENT

0045127

The present invention refers to improvements in the signalling and control members of planning boards. The object of the improvements in question is to incorporate in each one of the signalling and control sections autonomous voluntary operating means whereby the evolution of planning is materialised.

The mentioned autonomous means consists, generally, of coaxial elements arranged in horizontal alignments. Since one element is contained in the other, the inner being visible due to openings made for such purpose in the interiors, the possibilities of signalling and controlling are multiplied by combining the various openings of the outer element with different colours contemplated in the inner element.

Between each one of the alignments of the coaxial elements, there are other separating elements which are magnetically joined to fixed guides which, optionally, cover one or more alignments partially or completely. These separating elements can act as titleholders or they can complement same.

At present the planning boards being commercialised are modular and have magnetic signalling members which use punching systems, expansible belts, etc. which permit the movements of the different concepts or planned systems to be graphically plotted. However, a planning board has not yet been commercialised in which the signalling members, with their symbols and colours, are already incorporated in the board and can be made to appear and be substituted without the need of modifying the board nor incorporating auxiliary

BAD ORIGINAL

elements thereto.

On the other hand, since the different types of boards commercialised at present are specialised, the application thereof cannot be made extensive to other control systems and different types of board should be used to carry out a complete planning.

The improvements of the instant invention proportion the board with a complete diversification, adapting it to any need, wherefor all the demands of a more particular planning can be complied with.

According to the aforegoing, the invention consists in that the signalling members incorporating the symbols, numbers, letters and/or colours are comprised of a plurality of elements joined coaxially together and arranged in horizontal alignments.

Said signalling elements occupy, preferably, the complete module which can be extended sideways upwards or downwares, and they can even be inserted as title modules, in order to constitute the assembly suitable to the needs at each moment.

One of the mentioned coaxial elements, the inner, is disposed in a freely rotating manner about an axis, while the other element, that is the outer or casing of the first, turns thereabout. Both elements, the inner and the outer or casing, operate independently and the side surface of one of them, specifically the outer, is provided with a series of facets, preferably six, in each one of which there is provided an opening for observing the side surface of the inner element, the side surface of which is divided into bands differentiated

— 4 —                                    0045127

chromatically or by means of signs.

The horizontal alignments of signalling mem-
bers are disposed between horizontal separators which are
comprised of magnetic metal guides which constitute a positioning and fixing means for flexible signalling profiles.
Such profiles are joined by known magnetic means to the
metal guides.

However, the magnetic metal guides comprise
a half-round bore from which there protrude two parallel
wings which, close to the edge thereof, fold sideways
outwards to form a seat for the signalling profiles. Some
of the signalling profiles, the narrow ones, fit into the
guides, while the others, which are wider, are located
between two guides, covering the hollow formed therebetween and being seated by means of recesses in the corresponding folds of two adjacent guides.

The inner coaxial element of the signalling
members incorporates at one of its bases two diametrical-
ly opposed recesses in which there are housed claws protruding from a washer which act as separating members between coaxial elements and which constitutes operating
means for the inner coaxial element.

The casing or outer element is comprised of
a housing made according to the generatrix thereof, by
means of a groove centered with respect to one of the
facets. Said groove proportions the housing with a sufficient flexibility so that the inner element is housed
in the contour thereof, exerting theron a compressing
effect so that when the operation which causes rotation
thereof ceases, it is fixed to the inner element.

The openings of the housing made in each one
of the facets are different and adopt the contour of the
symbols conventionally used in signalling of the planning.

Hence, the main object of the invention is to
obtain a versatile planning which can be adapted to the
needs for controlling any business and incorporating its
own and autosufficient signalling means which can cope
with any situation and the evolution of the planned articles.

Another object of the invention is to proportion the market with a planning provided with a high
adaptability having its own means, the coupling thereof
to different functions not implying cuts and additions,
and whose handling is simple and rapid.

The mentioned advantages are represented in
the accompanying drawings, wherein merely by way of illustration there is represented a practical mode of embodiment which does not limit the possibilities of reali-
sation.

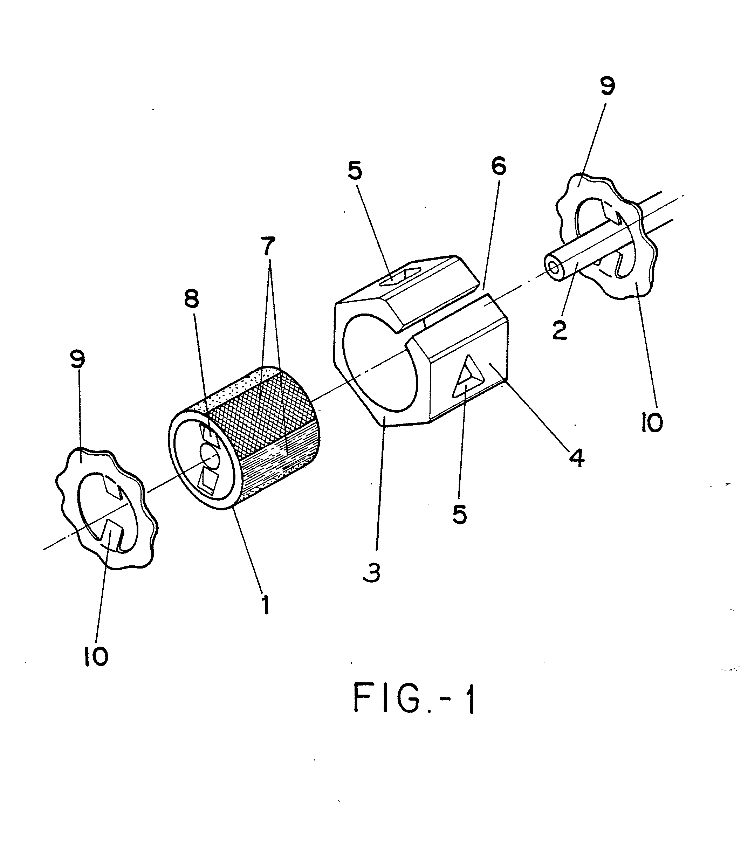

Thus, figure 1 of the mentioned drawings represents a perspective view of the coaxial signalling
means in a coupling position.

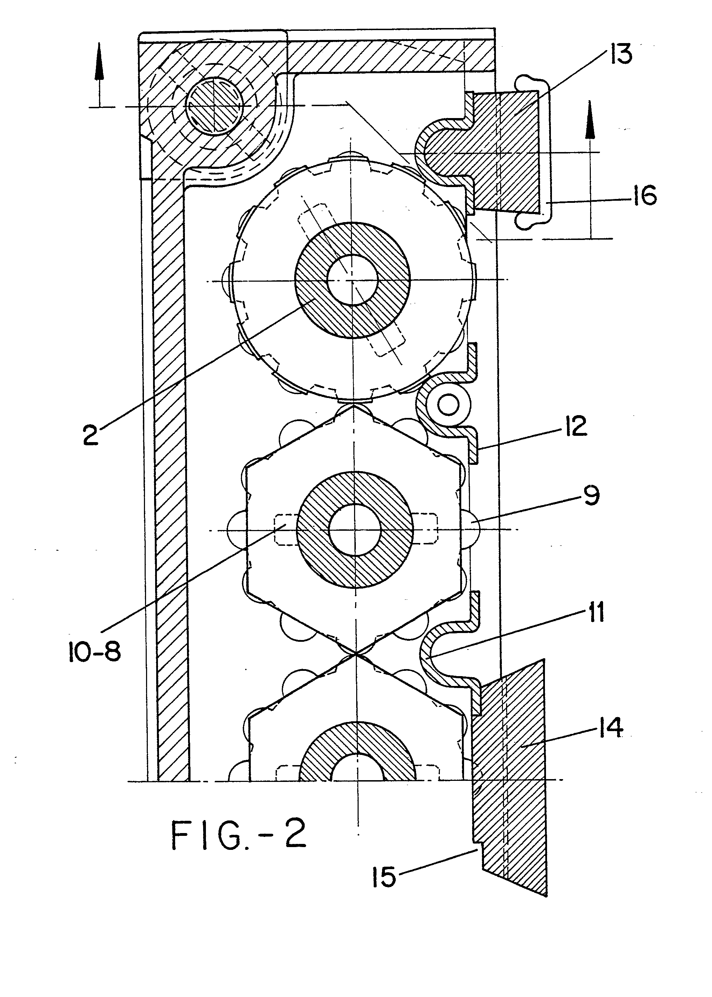

Figure 2 illustrates a cut detail wherein there
are represented the coaxial signalling means, the separating
elements or horizontal separators, as well as the guides
on which these are supported.

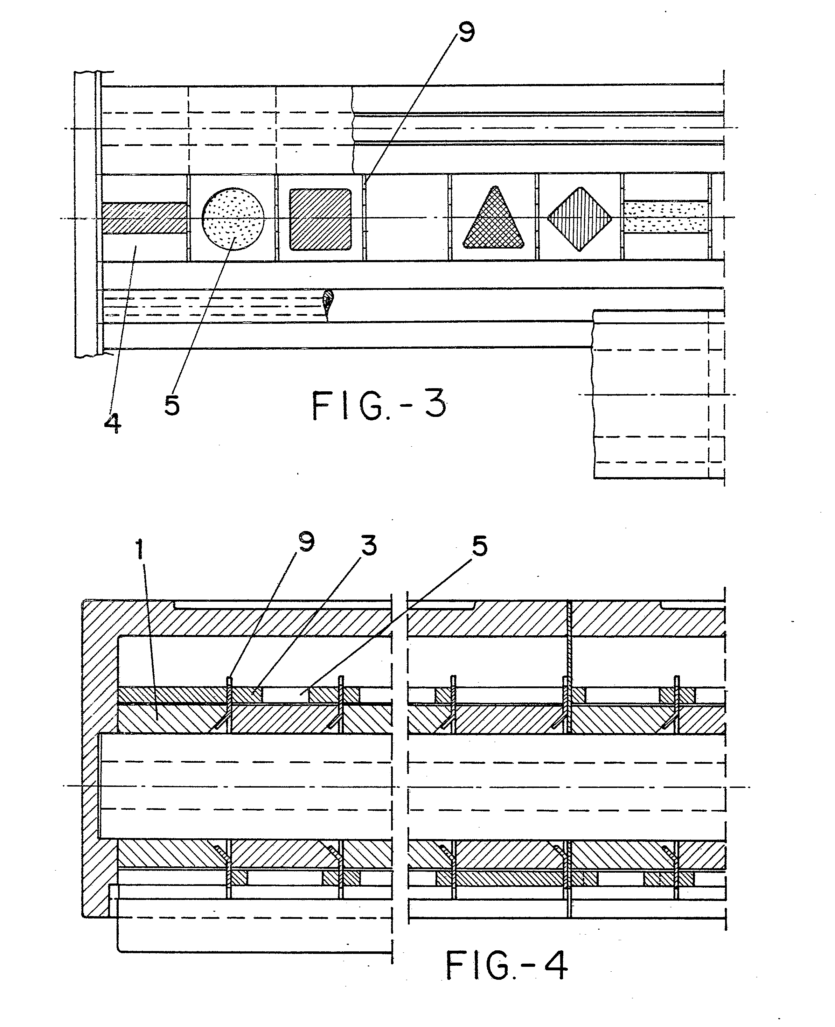

Figure 3 illustrates a detail of the signalling elements with the openings thereof indicating different symbols.

Figure 4 illustrates a sectional detail of
the signalling elements.

According to the aforegoing and as can be seen, the improvements in the signalling and control members of planning boards are to be used on a wall comprised of modular elements coupled both horizontally and vertically.

The improvements are characterised in that the signalling members incorporating the symbols, numbers, letters and/or colours and preferably occupying a complete module, are formed by a series of coaxial elements arranged in horizontal alignments. One of the mentioned elements, specifically the inner, 1 is so arranged that it rotates freely about an axis 2. The other element 3 or casing of the inner, in turn, rotates thereon.

Both elements operate independently, and one of them, the outer 3, is provided at its side surface with a series of facets 4, preferably six, in each one of which facets there is an opening 5 to enable observation of the side surface of the inner element 1. The surface of this inner element has, in the direction of its generatrix, a series of bands 7 differentiated chromatically or by means of signs.

The horizontal alignments of signalling members are arranged between horizontal separators, which are formed by magnetic metal guides 11 constituting positioning and also fixing means for the flexible separating and signalling profiles, which are joined by conventional magnetic means.

The magnetic metal guides 11 are formed by a half-round bore, from which there protrude two parallel wings, each one of which, close to the edge thereof,
are bent outwards as in 12 in order to form a seat for
the signalling profiles.

Some of the signalling profiles, the narrow
ones 13, fit into guides 11, while the others 14, which
are wider, are located between two guides 11 in order to
cover the hollow between guides and be seated, by means
of recesses 15, in the folds corresponding to two adjacent guides.

One of the bases of the inner coaxial element
1 of the signalling members has two diametrically opposed recesses 8, in which recesses 8 there are housed claws
10 which protrude from a washer 9 which acts as a separator between the coaxial elements, constituting at the
same time operating means for the inner coaxial element
1.

The outer or casing element 3 is comprised
of a housing which is made in the direction of its generatrix by means of a groove 6 which is centered with
respect to one of the facets 4. This element 3, constituted as mentioned, determines a compressing means with
respect to the inner element 1 which it encloses, and
the openings have different shapes in each one of the
facets.

~ 0045127

## CLAIMS

1. Improvements in the signalling and control members of planning boards of the wall type composed of modular elements coupled horizontally and vertically, characterised in that the signalling members incorporating the symbols, numbers, letters and/or colours and occupying preferably a complete module, are comprised of a plurality of coaxial elements disposed in horizontal alignments, one of the elements 1, the inner, rotating freely about an axis while the other element 3, the casing of the inner, turns thereabout; and in that both elements operate independently, the side surface of one of them, the outer, being provided with facets 4 in each one of which there is provided an opening 5 through which the side surface 7 of the inner element 1 can be seen, which surface 7 is, according to its generatrix, divided into bands differentiated chromatically or by means of signs.

2. Improvements in the signalling and control members of planning boards according to claim 1, essentially characterised in that the horizontal alignments of signalling members are d sposed between horizontal separators which are comprised of magnetic metal guides 11, constituting positioning and fixing means for flexible separating and signalling profiles 13 which are joined by conventional known magnetic means; and in that the magnetic metal guides/11/are constituted by a half-round bore from which there protrude two parallel wings 12 which, close to their edge, are folded sideways outwards constituting a seat for the signalling profiles 13, some of which are narrow and fit into the guides, while the others are wide and are located between two guides covering the
hollow between them and being seated by means of
recesses on the folds corresponding to two adjacent guides
11.

3.  Improvements in the signalling and control members
of planning boards according to the preceding claims,
characterised in that the inner coaxial element 1 of the
signalling members incorporates, at one of its bases,
diametrically opposed recesses 8 in which there are housed
claws 10 protruding from a separating washer 9 between
the coaxial elements which constitute operating means
of the inner coaxial element 1.

4.  Improvements in the signalling and control members
of planning boards according to the preceding claims,
characterised in that the casing element 3 is comprised
of a housing made according to the generatrix thereof,
by a groove 6 centered with respect to one of the facets,
said element exerting a compressing effect with respect
to that which it encloses, and the openings 5 having a
different shape in each one of the facets.

FIG.-1

0045127

FIG.-2

FIG.-3

FIG.-4